# EUROPEAN PATENT APPLICATION

(11) **EP 1 204 291 A1**
(43) Date of publication of application: **08.05.2002**
(21) Application number: 01932254.4
(22) Date of filing: 24.05.2001
(51) Int. Cl.: H04Q 7/38

(54) **RADIO COMMUNICATION SYSTEM AND COMMUNICATION TERMINAL APPARATUS USED THEREIN**

(30) Priority: 30.05.2000 JP 2000160426
(71) Applicant: MATSUSHITA ELECTRIC INDUSTRIAL CO., LTD., Kadoma-shi, Osaka 571-8501 (JP)
(72) Inventor: MIYA, Kazuyuki, Kawasaki-shi, Kanagawa 215-0021 (JP)
(74) Representative: Grünecker, Kinkeldey, Stockmair & Schwanhäusser Anwaltssozietät
(86) International application number: JP0104372
(87) International publication number: WO0193621

(57) **Abstract**

A speech signal of frequency f1 transmitted from a mobile station (MS) 201 which is a communication terminal is received by a base station (BS) 202 and undergoes predetermined processing, and the obtained receive data is sent to a mobile switching center (MSC) 204 via a radio network controller 203. In the MSC, data from a number of base stations is bundled and sent to a telephone network 207. On the other hand, a high-speed packet of frequency f2 transmitted from the mobile station (MS) 201 is received by a base station (BS) 205 and undergoes predetermined processing, and the obtained receive data is routed by a router 206 and sent to an IP (Internet Protocol) network 208.

## Description

### Technical Field

The present invention relates to a communication terminal apparatus used in a digital radio communication system.

### Background Art

With recent advances in Internet-related technologies, various kinds of services such as music distribution have come to be offered via the Internet. With such services, downlink transmission volumes are extremely large. In order to implement a service that has a large downlink transmission volume, great expectations are held for high-speed packet transmission on the downlink, and various technological developments have been made regarding such downlink high-speed packet transmission.

In a cellular system, a system called HDR (High Data Rate) has been proposed as a high-speed packet radio transmission system. This system uses the same bandwidth (1.25 MHz) on both uplink and downlink as the conventional CDMA (Code Division Multiple Access) system called IS-95. This HDR system is separated from an IS-95 system that accommodates speech and low-speed packets in a radio section according to frequency, and furthermore is separated from the IS-95 system even in the backbone (infrastructure), and is specialized for Internet access.

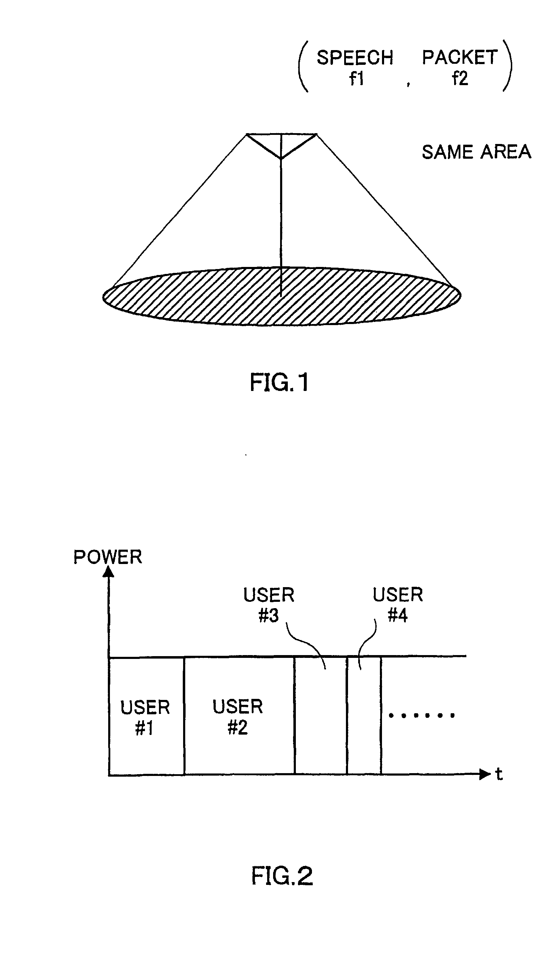

In an HDR system, a radio transmission method that does not perform transmission power control is used, and by always performing transmission at maximum power, high-speed packet transmission service is implemented in the same cover area as IS-95 providing slow-rate speech service. Thus, in this system, as shown in FIG.1, a cell and antenna are shared by IS-95 (speech service: f1) and the HDR system (high-speed packet transmission service: f2).

Generally speaking, a greater transmission delay is permissible for packets than for speech, and therefore with HDR, switching is carried out by means of hard handover, and soft handover is not used. However, even when hard handover is carried out, channels must be maintained up to the edge of the cover area to prevent holes in the service area-that is, to enable communication anywhere.

As high-speed packets have a high symbol rate, the necessary transmission power is high compared with slow-rate channels. Therefore, maintaining a high-speed packet channel up to the edge of the cover area requires considerable transmission power. Consequently, high-speed packet channels interfere in other channels, and as a result system capacity is reduced.

In order to solve this problem, transmission is always performed at maximum power in an HDR system, and the assignment time and transmission rate are changed according to channel conditions. That is to say, as shown in FIG.2, although transmission is performed at the same maximum power for each user, the assignment time and transmission rate are changed according to the channel conditions of individual users. In this way, channels are maintained in an HDR system by lowering the transmission rate (average throughput) at the edge of the cover area.

As described above, in an HDR system, a high transmission rate (throughput) can be assured in the immediate vicinity of the base station, but there is a problem of the transmission rate decreasing as the edge of the cover area is approached. This is because of the characteristic whereby cells and antennas of both systems can be shared by securing the same cover area as an IS-95 system that performs speech service.

Moreover, in an HDR system, as the number of channels accommodated in the same area increases, it becomes necessary to lower the average throughput of each channel among the limited carrier frequencies. Conversely, in order to maintain the average throughput of each channel, it is not possible to accommodate so many users in the limited carrier frequencies, and so the number of channels (users) must be restricted.

### Disclosure of Invention

It is an object of the present invention to provide a radio communication system and a communication terminal apparatus used therein that make it possible to prevent a decrease in the transmission rate (throughput) at the edge of the cover area, and also to improve spectral efficiency by suppressing interference, and increase the number of accommodated channels without lowering average throughput.

With regard to the accommodation of fast-moving terminals, if the cell radius is too small the frequency of handovers is high, and there is a problem of a drop in channel efficiency due to the associated control. Therefore, accommodation within a larger cell radius (macrocell) is desirable. For this reason, methods have been investigated whereby terminals are accommodated more efficiently by employing a so-called overlay structure, in which fast-moving terminals are accommodated in macrocells and slow-moving terminals are accommodated in microcells. That is to say, with the normal overlay structure concept, the same system is separated into two cells (micro/macro) accordingto frequency, andterminals are accommodated efficiently according to speed of movement.

The present inventors arrived at the present invention by considering this overlay structure, and finding that in an overlay structure consisting of a plurality of two or more systems with different carrier frequencies-for example, at least two systems with different radio transmission methods, such as the HDR method and IS-95 method, or the CDMA-FDD method and CDMA-TDD method-downlink high-speed packet transmission can be performed efficiently by selecting one or other cell (system) according to the communication service and communication environment (transmission path conditions, jam level).

That is, the subject of the present invention is performing downlink high-speed packet transmission efficiently, in a radio communication system that has an overlay structure whereby comparatively wide-area cells and cells of a smaller area than these cells are superimposed, by having a mobile station select from the cell systems the system for which the wanted connection is desired, and perform communication with the selected system. Alternatively, high-speed packet transmission is performed efficiently by having a mobile station report the communication environment, speed of movement measurement result, and wanted connection to one system, and having connection decided and communication performed based on determination on the base station side.

### Brief Description of Drawings

FIG.1 is a drawing for explaining the cover area of a base station;
FIG.2 is a drawing for explaining user assignment in an HDR system;
FIG.3 is a drawing showing the overlay structure in a radio communication system according to Embodiment 1 of the present invention;
FIG.4 is a drawing showing an outline configuration in a radio communication system according to Embodiment 1 of the present invention;
FIG.5 is a block diagram showing the configuration of a communication terminal apparatus in a radio communication system according to Embodiment 1 of the present invention;
FIG.6 is a drawing showing another example of an outline configuration in a radio communication system according to Embodiment 1 of the present invention;
FIG.7 is a block diagram showing the configuration of a communication terminal apparatus in a radio communication system according to Embodiment 2 of the present invention; and
FIG.8 is a block diagram showing the configuration of a base station apparatus in a radio communication system according to Embodiment 3 of the present invention.

### Best Mode for Carrying out the Invention

With reference now to the accompanying drawings, embodiments of the present invention will be explained in detail below.

### (Embodiment 1)

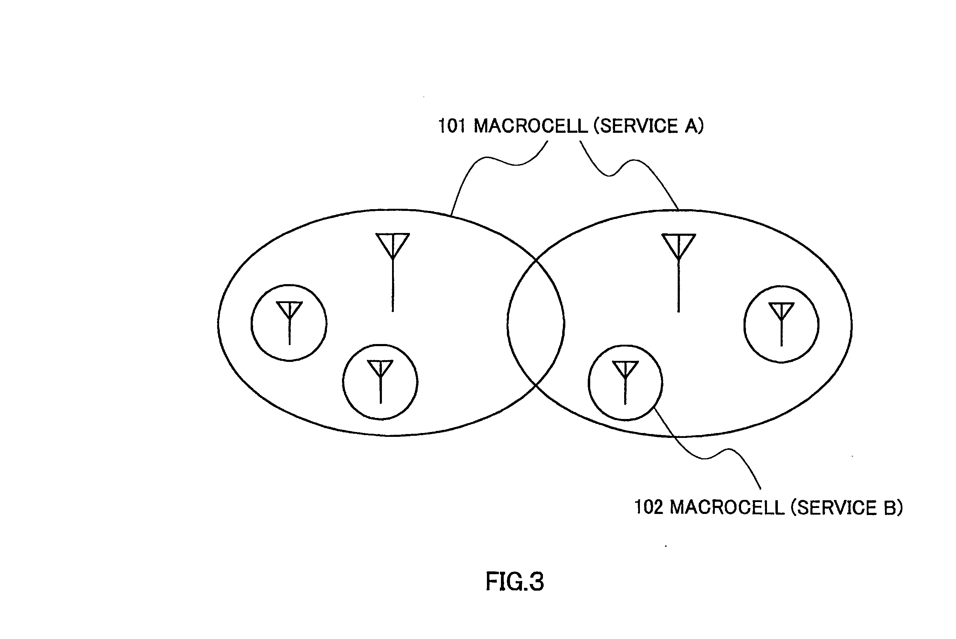

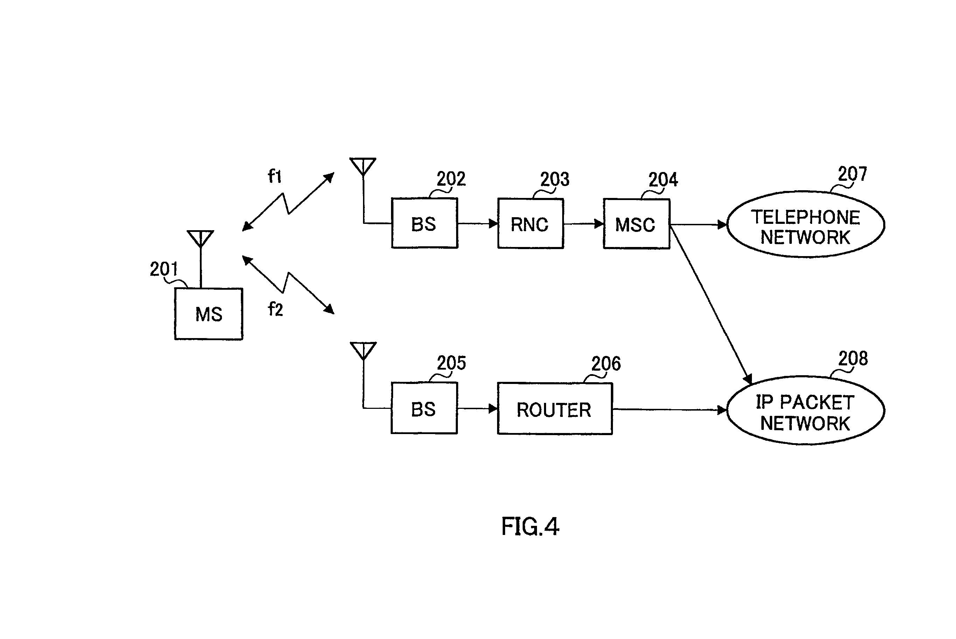

FIG.3 is a drawing showing the overlay structure in a radio communication system according to Embodiment 1 of the present invention, and FIG.4 is a drawing showing an outline configuration in a radio communication system according to Embodiment 1 of the present invention.

In the overlay structure shown in FIG.3, microcells 102 that cover a comparatively small area are superimposed within macrocells 101 that cover a comparatively wide area. Here, to simplify the explanation, a case will be described where service A is provided in macrocells 101 and service B is provided in microcells 102. The number of cells superimposed in the overlay structure is not limited to two, and there may be three or more superimposed in the same way. Also, with regard to systems with different radio communication methods, the number is not limited to two, and three or more may be used in the same way.

Also, a case is described here where service A is a speech service and is transmitted using frequency f1, while service B is a high-speed packet service and is transmitted using frequency f2. Here, "high-speed packet" means "packet transmitted at high speed" or "packet with a high transmission rate".

That is, in this embodiment, "a system that includes channels with a high radio transmission rate" is accommodated in a microcell 102. In this case, "a system that includes channels with a high radio transmission rate" means a system consisting only of channels with a high radio transmission rate, or a system mainly containing channels with a high radio transmission rate, and includes not only a system that transmits enormous volumes of data at high speed, as in the case of images or music, but also a system in which the volume of data is small but transmission is performed instantaneously (in a short transmission time) using high-speed packets, as in the case of speech.

In the radio communication system shown in FIG.4, a speech signal of frequency f1 transmitted from a mobile station (MS) 201 which is a communication terminal is received by a base station (BS) 202 and undergoes predetermined processing, and the obtained receive data is sent to a mobile switching station (hereinafter abbreviated to "MSC" (Mobile Switching Center)) 204 via a radio network control station (hereinafter abbreviated to "RNC" (Radio Network Controller)) 203. In the MSC 204, data from a number of base stations is bundled and sent to a telephone network 207. The MSC 204 is also connected to an IP packet network 208, and transmits an IP packet signal as necessary, generally using tunneling technology, as described later herein. The telephone network 207 may include a PSTN, ISDN, and so forth.

On the other hand, a high-speed packet of frequency f2 transmitted from the mobile station (MS) 201 is received by base station (BS) 205 and undergoes predetermined processing, and the obtained receive data is sent to the IP (Internet Protocol) packet network 208 by a router 206.

Thus, one system is connected to a telephone network from the RNC 203 via the MSC 204, and the other system is connected to an IP packet network 208 via a router 206 that has control functions such as radio resource management. Performing connection to the IP packet network via a router eliminates the need for an exchange and enables infrastructure construction and management costs to be reduced, thereby allowing communication charges to be decreased.

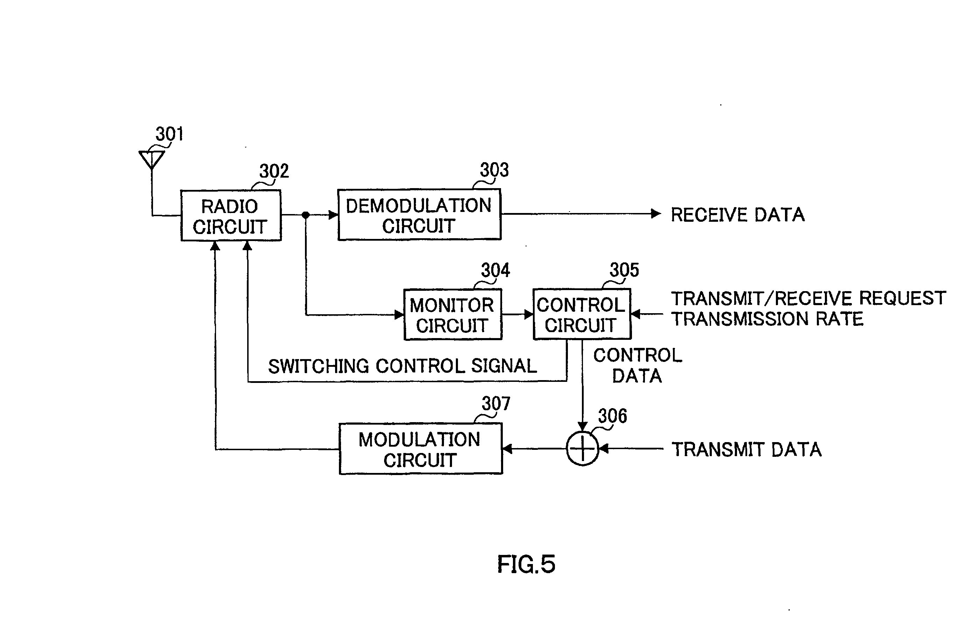

A mobile station in a system with an overlay structure of systems with different services has the configuration shown in FIG.5. A mobile station can communicate with a plurality of systems (base stations), and is provided with a plurality of reception sequences, but to simplify the explanation, only one sequence is shown in FIG.5.

A signal received via an antenna 301 undergoes predetermined radio processing (down-conversion, A/D conversion, etc.) by a radio circuit 302. After undergoing radio reception processing, the signal is sent to a demodulation circuit 303 where it undergoes demodulation processing and becomes receive data. In addition, the signal that has undergone radio reception processing and/or the signal that has undergone demodulation processing is sent to a monitor circuit 304 .

The monitor circuit 304 recognizes by means of control signals from base station 202 and base station 205 what kind of services are provided by base station 202 and base station 205, and outputs these control signals to a control circuit 305. The monitor circuit 304 also measures reception quality and speed of movement using signals from the base stations, estimates the propagation path conditions between the mobile station and the base stations, and recognizes approximately what the speed of movement of the mobile station is. The propagation path estimation result and speed of movement information are output to the control circuit 305 as control signals.

Based on control signals from the monitor circuit 304, and transmission/reception request and transmission rate information, the control circuit 305 outputs to an adder 306 control data indicating which system is to be connected to, and also outputs to the radio circuit 302 a switching control signal for switching to the frequency of the system corresponding to the service to be connected to. The adder 306 multiplexes the above-described control data for system connection with transmit data, and outputs the resulting signal to a modulation circuit 307. The modulation circuit 307 performs digital modulation processing on the multiplexed transmit data and control data, and outputs the resulting signal to the radio circuit 302.

In the radio circuit 302, predetermined radio transmission processing (D/A conversion, up-conversion, etc.) is carried out on the transmit data and control data. Also, as a switching control signal for switching to the frequency of the system to be connected to is input from the control circuit 305, the radio circuit 302 switches the frequency in accordance with that switching control signal. After undergoing radio transmission processing, the transmit data is transmitted to the base station via the antenna 301.

Next, operations in a radio communication system that has the above configuration will be described.

In FIG.4, the mobile station 201 receives signals from base station 202 and base station 205, and recognizes what kind of services are provided by base station 202 and base station 205 by means of its internal monitor circuit 304. Control signals indicating these base station services are sent to the control circuit 305.

When the mobile station 201 requests high-speed packet transmission, that request is sent to the control circuit 305. Based on the control signals indicating the base station services and the indication of a request for high-speed packet transmission, the control circuit 305 selects base station 205 as the base station to be connected to, and multiplexes a control signal indicating this selection result (to the effect that connection is desired) with transmit data to be sent to base station 205.

As the control circuit 305 has determined that connection should be made to base station 205, it outputs to the radio circuit 302 a switching control signal for switching to system frequency f2 of base station 205. The radio circuit 302 switches to frequency f2 in accordance with the switching control signal.

On receiving a signal transmitted from the mobile station 201, base station 205 shifts to an operation to connect to the mobile station 201 based on control data contained in the signal-that is, data indicating a desire to connect. Then, when base station 205 and the mobile station 201 are connected, high-speed packet transmission is started. When the mobile station 201 receives high-speed packets-when downloading, for example-it receives the high-speed packets from base station 205 via the router 206 from the IP packet network 208.

When the mobile station 201 uses speech service, the relevant request is sent to the control circuit 305. Based on the control signals indicating the base station services and the indication of a request for speech service, the control circuit 305 selects base station 202 as the base station to be connected to, and multiplexes a control signal indicating this selection result (to the effect that connection is desired) with transmit data to be sent to base station 202.

As the control circuit 305 has determined that connection should be made to base station 202, it outputs to the radio circuit 302 a switching control signal for switching to system frequency f1 of base station 202. The radio circuit 302 switches to frequency f1 in accordance with the switching control signal.

On receiving a signal transmitted from the mobile station 201, base station 202 shifts to an operation to connect to the mobile station 201 based on control data contained in the signal-that is, data indicating a desire to connect. Then, when base station 202 and the mobile station 201 are connected, speech communication is started. When performing speech communication, the mobile station 201 is connected to the telephone network 207 via the RNC 203 and MSC 204.

Thus, in a radio communication system according to this embodiment, an overlay structure is introduced, and the same cover area is not used for speech service and high-speed packet transmission service, but instead, these are accommodated respectively in a macrocell and microcells with a smaller cell radius. At this time, the planar number of repetitions of microcells that accommodate a high-speed packet transmission service is large. As high-speed packet transmission is accommodated in microcells in this way, it is possible to prevent the decrease in transmission rate (throughput) at cell edges which is a concern with HDR. Also, by accommodating high-speed packet transmission service in microcells, it is possible to suppress interference since propagation distances are shorter. As a result, spectral efficiency improves, and it is possible to increase the number of accommodated channels without reducing average throughput-that is, to attain a faster transmission rate per channel and achieve an increase in system capacity.

Moreover, by accommodating a fast-rate transmission channel in a microcell with a small cell radius, transmission power can be decreased proportionally to the shorter propagation distance. Thus a large-output transmit amplifier is not necessary in a base station, and base station equipment costs can be reduced.

In the above description, a case has been described where two systems with different carrier frequencies comprise an overlay structure, base station services are recognized by means of control signals from the base stations, and the system is switched based on these services-that is, providing a service that accommodates speech with a real-time requirement and non-real-time low-speed packets in a macrocell, and a service that accommodates non-real-time high-speed packets in a microcell. With regard to the present invention, factors in system switching are not limited to this, and one or other system may be selected and connected according to the speed of movement of a mobile station or the communication environment (propagation path conditions and noise level).

In this case, with regard to speed of movement, a fast-moving mobile station is accommodated in a macrocell in order to minimize the number of handovers between cells, and a slow-moving mobile station is basically accommodated in a microcell. At this time, the mobile station measures a Doppler frequency, etc., from the received signal from a base station by means of a monitor circuit, and based on that information selects the system (base station) to be connected to by means of a control circuit.

Thus, basically, a mobile station accommodating system is selected by speed of movement, and in a service ( such as speech) with a real-time requirement, for example, when audio quality is important, a selection is made so that connection is made to a microcell (circuit switching)-that is, to base station 202-and when it is wished to keep call charges low, a selection is made so that connection is made to a microcell-that is, to base station 205. When speech communication is carried out by means of connection to base station 205, performing IP transmission (VoIP: Voice over IP) is also a possibility.

When the communication environment (propagation path conditions and noise level) is used as a system switching factor, a mobile station for which the communication environment is good is accommodated in a macrocell that has a wide cover area, and a mobile station for which the communication environment is poor is accommodated in a microcell. At this time, the mobile station measures reception quality (SIR, etc.) from the received signal from a base station by means of a monitor circuit, and based on that information selects the system (base station) to be connected to by means of a control circuit.

In the above description, a case has been described where a base station 202 (macrocell) that performs speech service is connected to a telephone network 207 via an RNC 203 and MSC 204, and a base station 205 (microcell) that performs high-speed packet transmission service is connected to an IP packet network 208 via a router 206. In the present invention a configuration may also be used, as shown in FIG.4, whereby base station 202 (macrocell) that performs speech service and base station 205 (microcell) that performs high-speed packet transmission service are connected to the backbone (telephone network 207 or IP packet network 208) via a common RNC 203 and MSC 204.

In this case, too, the same kind of effect as described above can be obtained.

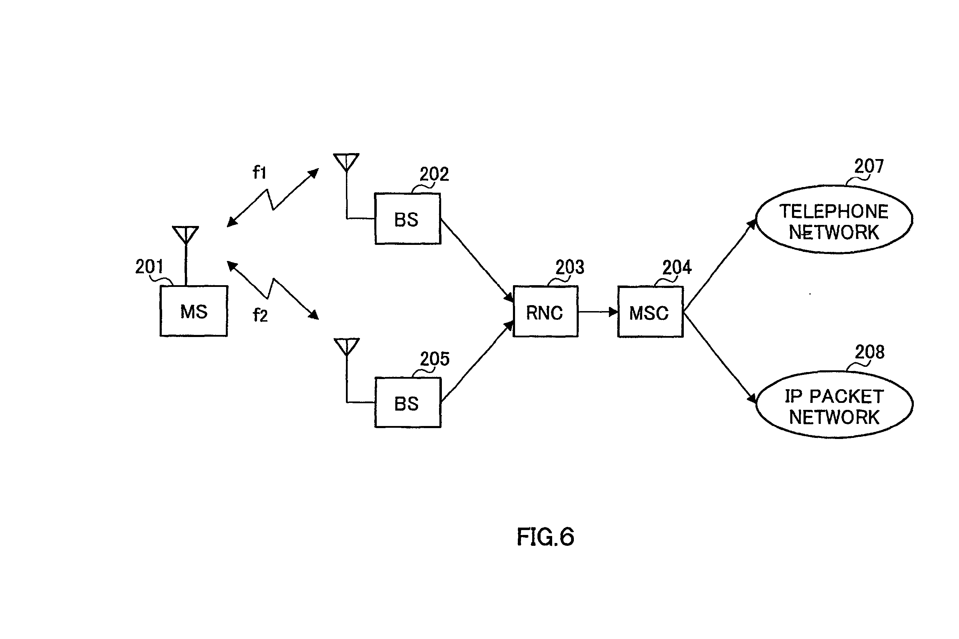

When an IP packet signal is transmitted to the telephone network 207 or IP packet network 208 via an RNC 203 and MSC 204, as shown in FIG. 6, tunneling technology is generally used. That is, a method can be used whereby the IP address of a communication terminal or an IP address that takes account of the mobility of a mobile IP, etc., is looked at, and, instead of performing direct routing from BS 202 or BS 205 through the MSC 204, the connection destination up to the BTS is managed separately as a mobile communication network, a path (local address, node address) is extended independently as a mobile communication network, and a signal from the IP packet network 208 is transferred.

### (Embodiment 2)

In this embodiment, a case is described where the systems constituting an overlay structure are CDMA system FDD (Frequency Division Duplex) and TDD (Time Division Duplex).

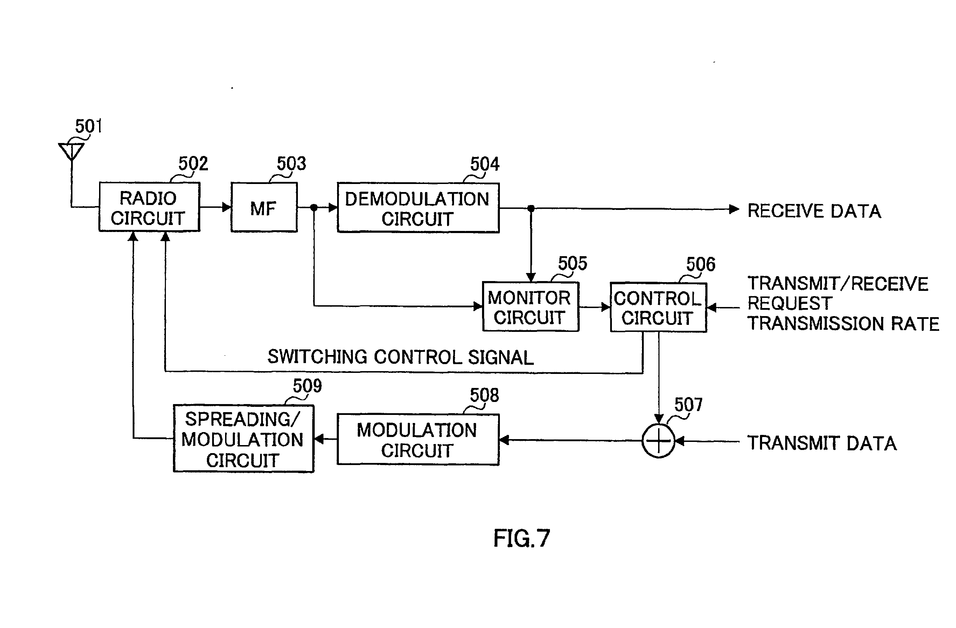

The configuration in a radio communication system according to this embodiment is identical to the configuration shown in FIG.4 or FIG.6. Therefore, this embodiment will be described with reference to FIG.4 as appropriate. A mobile station in a system with an overlay structure of systems with different services has the configuration shown in FIG.7. A mobile station can communicate with a plurality of systems (base stations), and is provided with a plurality of reception sequences, but to simplify the explanation, only one sequence is shown in FIG.7.

A signal received via an antenna 501 undergoes predetermined radio processing (down-conversion, A/D conversion, etc.) by a radio circuit 502. After undergoing radio reception processing, the signal is sent to a matched filter 503, where despreading processing is performed with the spreading code used by the base station. By this means, the signal transmitted to that mobile station is extracted from the received signal.

The signal that has undergone despreading processing is sent to a demodulation circuit 504 where it undergoes demodulation processing and becomes receive data. In addition, the signal that has undergone despreading processing and/or the signal that has undergone demodulation processing is sent to a monitor circuit 505.

The monitor circuit 505 recognizes by means of control signals from base station 202 and base station 205 what kind of services are provided by base station 202 and base station 205, and outputs these control signals to a control circuit 506. The monitor circuit 505 also measures reception quality and speed of movement using signals from the base stations, estimates the propagation path conditions between the mobile station and the base stations, and recognizes approximately what the speed of movement of the mobile station is. The propagation path estimation result and speed of movement information are output to the control circuit 506 as control signals.

Based on control signals from the monitor circuit 505, and transmission/reception request and transmission rate information, the control circuit 506 outputs to an adder 507 control data indicating which system is to be connected to, and also outputs to the radio circuit 502 a switching control signal for switching to the frequency of the system corresponding to the service to be connected to. The adder 507 multiplexes the above-described control data for system connection with transmit data, and outputs the resulting signal to a modulation circuit 508. The modulation circuit 508 performs digital modulation processing on the multiplexed transmit data and control data, and outputs the resulting signal to a spreading/modulation circuit 509. The spreading/modulation circuit 509 performs spreading/modulation processing on the multiplexed transmit data and control data using a predetermined spreading code, and outputs the signal that has undergone spreading/modulation to the radio circuit 502.

In the radio circuit 502, predetermined radio transmission processing (D/A conversion, up-conversion, etc.) is carried out on the transmit data and control data. Also, as a switching control signal for switching to the frequency of the system to be connected to is input from the control circuit 506, the radio circuit 502 switches the frequency in accordance with that switching control signal. After undergoing radio transmission processing, the transmit data is transmitted to the base station via the antenna 501.

In a radio communication system that includes a mobile station with the configuration shown in FIG.7, it is possible to switch the system according to the service by means of the kind of operations described in Embodiment 1. In this case, for example, high-speed packet transmission service is accommodated by the TDD system of a microcell (base station 205), and speech service is accommodated by the FDD system of a macrocell (base station 202).

Thus, in a radio communication system according to this embodiment, high-speed packet transmission is accommodated in microcells, and is it therefore possible to prevent the decrease in transmission rate (throughput) at cell edges which is a concern with HDR. Also, by accommodating high-speed packet transmission services in microcells, it is possible to suppress interference since propagation distances are shorter. As a result, spectral efficiency improves, and it is possible to increase the number of accommodated channels without reducing average throughput-that is, to attain a faster transmission rate per channel and achieve an increase in system capacity.

Moreover, by accommodating a fast-rate transmission channel in a microcell with a small cell radius, transmission power can be decreased proportionally to the shorter distance. Thus a large-output transmit amplifier is not necessary in a base station, and base station equipment costs can be reduced.

The particular effects of this embodiment will now be described.

In a CDMA-TDD system a guard time is provided in order to prevent collisions due to propagation delay between an uplink and downlink. The length of this guard time depends on the cell radius: the greater the cell radius, the longer the guard time required. The reason for this is that, as the cell radius increases the propagation delay between the cell edge and the base station increases, and if the guard time is insufficient in this case, in reception by the base station an uplink signal whose reception is delayed will coincide with the downlink signal transmission timing, and a collision will occur.

As the cell radius increases the guard time must be increased, as explained above, and the overhead ratio (the proportion of the total communication time occupied by a period in which there is not actually a transmit/receive signal) will increase, and transmission efficiency will decrease, accordingly. Therefore a large cell radius is generally considered to be unsuitable for a TDD system. Consequently, a TDD system is suited to microcells or picocells with a comparatively small cell radius.

This guard time is specific to a TDD system, which uses ping-pong transmission, and is not necessary in an FDD system. Therefore, in an FDD system there are no restrictions on the cell radius, which is a guard time related factor, and it is possible to use macrocells which are larger than microcells or picocells.

When an FDD system has the same radio frequency band for the uplink and downlink, it basically has approximately the same system capacity on the uplink and downlink, and so, in a case where many asymmetrical transmission channels with a large downlink transmission volume and small uplink transmission volume are accommodated, such as Internet connection or music distribution, for example, the total up/downlink transmission volume is unbalanced, and spectral efficiency is poor. With a TDD system, on the other hand, the up/downlink system capacity can easily be made asymmetrical by making the up/downlink time ratio ( number of slots, etc.) asymmetrical. Consequently, downlink high-speed channels (packets) can be accommodated efficiently. Thus, a TDD system is suited to asymmetrical transmission.

Also, as the required transmission power is high in high-speed packet transmission, it is difficult to make cell radiuses large. Therefore, accommodation in microcells or picocells is desirable for services for which transmission power is high, such as high-speed packet transmission.

By accommodating downlink high-speed channel (packet) transmission, which is asymmetrical transmission, in a TDD system as microcells with a small cell radius in this way, and accommodating other transmission in an FDD system as macrocells, it is possible to improve efficiency in the system. A radio communication apparatus according to this embodiment is especially useful in a CDMA system in which other channels are divided by means of a spreading code and interference of other channels is a presupposition.

In above Embodiments 1 and 2 a case has been described where a system accommodating a particular service is connected to by selection and switching, but it is not the case that connection of one mobile station is disjunctive, and as long as the system is changed for each service, channels may be connected simultaneously for each system.

That is to say, the system selection result may differ for each service for a single mobile station, and even if a different selection result is produced for each service, so that, for example, a macrocell (base station 202) is selected for speech service and a microcell (base station 205) is selected for high-speed packet transmission service, it is possible for communication with the respective base stations to be carried out simultaneously for the respective services.

### (Embodiment 3)

In this embodiment, a case is described where communication is performed after communication environment and speed of movement measurement results, and a desire for connection, are reported from a mobile station to one system, and connection is decided based on determination on the base station side.

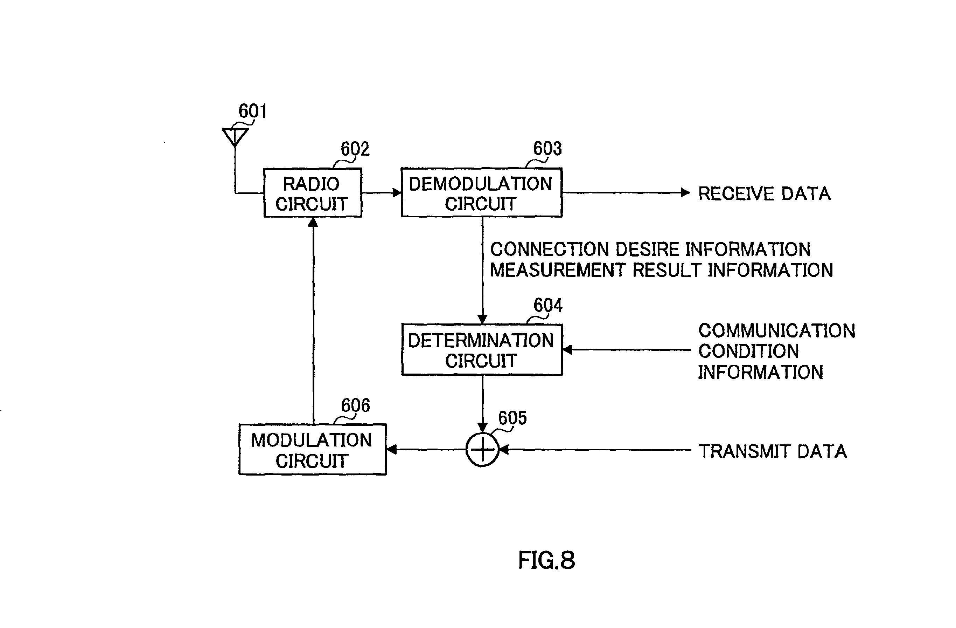

FIG.8 is a block diagram showing the configuration of a base station apparatus in a radio communication system according to Embodiment 3 of the present invention.

First, as described in Embodiments 1 and 2 above, a control signal indicating a desire for connection (connection desire information) based on measurements such as individual services, communication environment, and speed of movement, and the results of those measurements, are sent from a mobile station.

A signal including this control signal and these measurement results is received via an antenna 601, and undergoes predetermined radio processing (down-conversion, A/D conversion, etc.) by a radio circuit 602. After undergoing radio reception processing, the signal is sent to a demodulation circuit 603 where it undergoes demodulation processing and becomes receive data. In addition, the signal that has undergone demodulation processing is sent to a determination circuit 604.

The determination circuit 604 determines whether or not the mobile station is to be connected based on the connection desire information and measurement result information from the mobile station, together with communication condition information, etc., monitored by the station itself. For example, when a high-speed packet transmission connection request is received from the mobile station, if the communication conditions are poor or the noise level is high, it is determined that high-speed packet transmission cannot be accommodated at present, and control data indicating that connection is not possible is output to an adder 605. If, on the other hand, it is determined that high-speed packet transmission can be accommodated at present, control data indicating that connection is possible is output to the adder 605.

The adder 605 multiplexes the above-described system connection control data with transmit data, and outputs the resulting signal to a modulation circuit 606. The modulation circuit 606 performs digital modulation processing on the multiplexed transmit data and control data, and outputs the resulting signal to the radio circuit 602.

In the radio circuit 602, predetermined radio transmission processing (D/A conversion, up-conversion, etc.) is carried out on the transmit data and control data. After undergoing radio transmission processing, the transmit data is transmitted to the mobile station via the antenna 601.

Thus, a base station apparatus according to this embodiment determines whether or not connection is possible to a mobile station based on connection request information, and communication condition information measured by the station itself, and if the result of that determination is that connection is possible performs communication connection to the mobile station, or if the result of that determination is that connection is not possible notifies the mobile station to that effect. By this means, when a mobile station selects a system and issues a connection request to a base station, the base station determines whether or not connection is possible taking into account various factors such as communication conditions.

In the above description a case has been described where a base station determines whether or not connection is possible, and reports the result of that determination. In the present invention, it is also possible for a base station to determine which system a mobile station should be accommodated by, as well as than determining whether or not connection is possible.

In this case, if the apparatus is configured with a common control station (RNC) as shown in FIG.6, which system the mobile station should be accommodated by is determined by the RNC 203 or MSC 204. If the RNC 203 and router 206 are provided separately as shown in FIG.3, an apparatus that determines which system the mobile station should be accommodated by is provided between the RNC 203 (or MSC 204 ) and router 206, and that apparatus determines which system the mobile station is to be accommodated by and notifies the mobile station of the result of that determination.

The present invention is not limited to above Embodiments 1 to 3, and can be implemented with various modifications. For example, in above Embodiment 2 a case is described where the access method is CDMA, but TDMA (Time Division Multiple Access) or FDMA (Frequency Division Multiple Access) can also be used as an access method in the present invention.

Also, in the above embodiments, a case is described where there are two systems comprising an overlay structure, but the present invention can also be applied to a case where three or more systems comprise an overlay structure.

Moreover, in the above embodiments, a case is described where a system is determined for which selection is made with regard to speed of movement and communication environment, but this case is only one example, and implementation is also possible with the selection criteria changed as appropriate, with service, speed of movement, and communication environment taken separately or in combination.

A radio communication system of the present invention has a configuration whereby, in a radio communication system that has an overlay structure in which a first cell with a comparatively wide area and a second cell with a smaller area than the first cell are superimposed, the radio transmission method differs between the system of the first cell and the system of the second cell, the system of the second cell includes a channel with a high transmission rate, and a mobile station selects a system to which wanted connection is desired from the system of the first cell and the system of the second cell, and performs communication with the selected system.

According to this configuration, an overlay structure is introduced, and the same cover area is not used for different services, but instead, these are accommodated respectively in a cell with a comparatively wide area (macrocell) and a microcell with a smaller cell radius. By this means it is possible to select the most appropriate system, and it is thus possible to perform communication, and in particular downlink high-speed data communication, more efficiently in the system.

A radio communication apparatus of the present invention has a configuration whereby, in the above configuration, the system of the first cell and the system of the second cell are controlled by a common control station, and are connected to a telephone network via an exchange.

A radio communication apparatus of the present invention has a configuration whereby, in the above configuration, at least one of the system of the first cell and the system of the second cell is connected to an IP packet network via a router.

According to this configuration, by connecting to an IP packet network via an IP packet network apparatus such as a router, the intermediation of an exchange is made unnecessary, and infrastructure construction and management costs can be reduced, thereby enabling communication charges to be decreased.

A radio communication apparatus of the present invention has a configuration whereby, in the above configuration, it is possible to perform communication with the system of the first cell and the system of the second cell simultaneously on different channels.

According to this configuration, it is possible for communication with respective base stations to be carried out simultaneously for respective services.

A radio communication apparatus of the present invention has a configuration whereby, in the above configuration, a mobile station selects a system taking into account at least one item chosen from a group consisting of service, communication environment, and speed of movement of the station itself, in the first cell and second cell.

According to this configuration, it is possible to select the most appropriate system according to service, etc., and it is thus possible to perform communication, and in particular downlink high-speed data communication, more efficiently in the system.

A radio communication apparatus of the present invention has a configuration whereby, in the above configuration, a CDMA-FDD system is used in the first cell and a CDMA-TDD system is used in the second cell.

According to this configuration, downlink channel high-speed transmission which is asymmetrical transmission is accommodated in a TDD system as microcells with a small cell radius, and other transmission is accommodated in an FDD system as macrocells, thereby enabling spectral efficiency to be improved in the overall system. This is especially useful in a CDMA system in which other channels are divided by means of a spreading code and interference of other channels is a presupposition.

A radio communication system of the present invention has a configuration comprising a monitoring section that monitors downlink signals from each cell in a radio communication system that has an overlay structure in which a first cell with a comparatively wide area and a second cell with a smaller area than the first cell are superimposed, a selecting section that selects the cell system to be connected to based on information monitored by the monitoring section and a connection request from the station itself, and a communication connecting section that performs communication connection to the base station of the system selected by the selecting section.

According to this configuration, it is possible to select the most appropriate system, and it is thus possible to perform communication more efficiently in the system.

A radio communication apparatus of the present invention has a configuration whereby, in the above configuration, the selecting section selects a system taking into account at least one item chosen from a group consisting of service, communication environment, and speed of movement of the station itself, in the first cell and second cell.

According to this configuration, it is possible to select the most appropriate system according to service, etc., and it is thus possible to perform communication, and in particular downlink high-speed data communication, more efficiently in the system.

A base station apparatus of the present invention has a configuration comprising a determining section that determines, based on connection request information from a communication terminal apparatus with the above configuration and communication condition information measured by the station itself, whether or not connection to the communication terminal apparatus is possible, and a communication connecting section that, when the result of determination by the determining section is that connection is possible performs communication connection to the communication terminal apparatus, and, when the result of determination by the determining section is that connection is not possible notifies the communication terminal apparatus that connection is not possible.

According to this configuration, when a mobile station selects a system and issues a connection request to a base station, the base station determines whether or not connection is possible taking into account various factors such as communication conditions.

As described above, a radio communication system of the present invention has an overlay structure in which a first cell with a comparatively wide area and a second cell with a smaller area than this cell are superimposed, and a mobile station selects a system to which wanted connection is desired from the systems of each cell, and performs communication with the selected system, so that communication is performed efficiently on a downlink with high-speed packets. As a result, it is possible to prevent a decrease in the transmission rate (throughput) at the edge of the cover area, and also to improve spectral efficiency by suppressing interference, and increase the number of accommodated channels without lowering average throughput.

This application is based on Japanese Patent Application No.2000-160426 filed on May 30, 2000, entire content of which is expressly incorporated by reference herein.

### Industrial Applicability

The present invention is applicable to a digital radio communication system in which the access method is CDMA, TDMA, FDMA, or the like.

## Claims

1. A radio communication system whereby, in a radio communication system that has an overlay structure in which a first cell with a comparatively wide area and a second cell with a smaller area than said first cell are superimposed, the radio transmission method differs between a system of said first cell and a system of said second cell, and said system of said second cell includes a channel with a high transmission rate, and a mobile station selects a system to which wanted connection is desired from said system of said first cell and said system of said second cell, and performs communication with the selected system.

2. The radio communication system according to claim 1, wherein said system of said first cell and said system of said second cell are controlled by a common control station and are connected to a telephone network via an exchange.

3. The radio communication system according to claim 1, wherein at least one system of said system of said first cell and said system of said second cell is connected to an IP packet network via a router.

4. The radio communication system according to claim 1, wherein it is possible to perform communication with said system of said first cell and said system of said second cell simultaneously on different channels.

5. The radio communication system according to claim 1, wherein said mobile station selects a system taking into account at least one item chosen from a group consisting of service, communication environment, and speed of movement of the station itself, in said first cell and said second cell.

6. The radio communication system according to claim 1, wherein a CDMA-FDD system is used in said first cell and a CDMA-TDD system is used in said second cell.

7. A communication terminal apparatus comprising:
monitoring means for monitoring downlink signals from each cell in a radio communication system that has an overlay structure in which a first cell with a comparatively wide area and a second cell with a smaller area than said first cell are superimposed;
selecting means for selecting a cell system to be connected to based on information monitored by said monitoring means and a connection request from the station itself; and
communication connecting means for performing communication connection to a base station of a system selected by said selecting means.

8. The communication terminal apparatus according to claim 7, wherein said selecting means selects a system taking into account at least one item chosen from a group consisting of service, communication environment, and speed of movement of the station itself, in said first cell and said second cell.

9. A base station apparatus comprising:
determining means for determining, based on connection request information from the communication terminal apparatus according to claim 7 and communication condition information measured by the station itself, whether or not connection to said communication terminal apparatus is possible; and
communication connecting means for, when a result of determination by said determining means is that connection is possible, performing communication connection to said communication terminal apparatus, and, when a result of determination by said determining means is that connection is not possible, notifying said communication terminal apparatus that connection is not possible.
